(19) Europäisches Patentamt
European Patent Office
Office européen des brevets

(11) **EP 1 699 343 B1**

(12) **EUROPÄISCHE PATENTSCHRIFT**

(45) Veröffentlichungstag und Bekanntmachung des Hinweises auf die Patenterteilung:
**17.02.2010 Patentblatt 2010/07**

(21) Anmeldenummer: **04804772.4**

(22) Anmeldetag: **10.12.2004**

(51) Int Cl.:
*A47L 15/42* (2006.01)   *G01F 23/26* (2006.01)

(86) Internationale Anmeldenummer:
**PCT/EP2004/053404**

(87) Internationale Veröffentlichungsnummer:
**WO 2005/060815 (07.07.2005 Gazette 2005/27)**

(54) **GESCHIRRSPÜLMASCHINE MIT EINEM SYSTEM ZUR FÜLLSTANDERKENNUNG**

DISHWASHER WITH A SYSTEM FOR RECOGNITION OF FILLING LEVEL

LAVE-VAISSELLE POURVU D'UN SYSTEME DE DETECTION DE NIVEAU

(84) Benannte Vertragsstaaten:
**AT BE BG CH CY CZ DE DK EE ES FI FR GB GR HU IE IS IT LI LT LU MC NL PL PT RO SE SI SK TR**

(30) Priorität: **22.12.2003 DE 10360561**
**21.04.2004 DE 102004019351**

(43) Veröffentlichungstag der Anmeldung:
**13.09.2006 Patentblatt 2006/37**

(73) Patentinhaber: **BSH Bosch und Siemens Hausgeräte GmbH**
**81739 München (DE)**

(72) Erfinder:
• **CURTIUS, Georg**
**89407 Dillingen (DE)**
• **HESTERBERG, Bernd**
**89520 Heidenheim (DE)**
• **ROSENBAUER, Michael**
**86756 Reimlingen (DE)**
• **SCHWEIER, Peter**
**86735 Forheim (DE)**

(56) Entgegenhaltungen:
DE-A1- 2 924 556   DE-A1- 3 014 225
DE-A1- 3 236 291   US-A- 4 982 606

**Beschreibung**

Gegenstand der vorliegenden Erfindung ist eine Geschirrspülmaschine mit einem System zur Erkennung des Flüssigkeitspegels der in der Geschirrspülmaschine enthaltenen Spülflüssigkeit.

Es sind Geschirrspülmaschinen mit Vorrichtungen zur Füllstanderkennung bekannt, bei denen die Erfassung des Flüssigkeitspegels mit mechanischen Mitteln beispielsweise durch Schwimmer erfolgt. Bei Vorrichtungen dieser Art schwimmt der Schwimmer auf der Flüssigkeitsoberfläche auf, sobald der Flüssigkeitspegel in der Geschirrspülmaschine ein bestimmtes Niveau übersteigt. Der Schwimmer ist üblicherweise mit einem Schalter mechanisch verbunden, der seinen Schaltzustand aufgrund der Aufschwimmbewegung des Schwimmers ändert und ein entsprechendes Signal an die Programmsteuerung der Geschirrspülmaschine weiterleitet.

Andere Systeme zur Erfassung des Flüssigkeitspegels in einer Geschirrspülmaschine arbeiten mit einer Druckdose in einem kommunizierenden Röhrensystem, die bei steigendem Flüssigkeitspegel komprimiert wird. Aus dem Ausmaß der Kompression der Druckdose kann der Flüssigkeitspegel in der Geschirrspülmaschine ermittelt werden. Diese bekannten Systeme zur Füllstanderkennung haben den Nachteil, dass sie eine Anzahl mechanisch beweglicher Teile aufweisen, die für Verschleiß und Verschmutzung beispielsweise durch abgelagerte Spülrückstände anfällig sind, was zu Toleranzproblemen bis hin zum vollständigen Ausfall der Vorrichtung zur Füllstanderkennung führen kann. Dokument DE-A-2 924 556 offenbart ein Geschirrspüler gemäß dem Oberbegriff des Anspruchs 1.

Aufgabe der vorliegenden Erfindung ist es, eine Geschirrspülmaschine mit einem System zur Füllstanderkennung bereitzustellen, das ohne die Verwendung von beweglichen Teilen den Flüssigkeitspegel in der Geschirrspülmaschine zuverlässig ermittelt.

Diese Aufgabe wird durch die erfindungsgemäße Geschirrspülmaschine mit den Merkmalen gemäß Anspruch 1 gelöst. Vorteilhafte Weiterbildungen der vorliegenden Erfindung sind in den Unteransprüchen 2 bis 10 gekennzeichnet.

Die erfindungsgemäße Geschirrspülmaschine umfasst mindestens einen Spülbehälter zur Aufnahme von zu reinigendem Spülgut und ein System zur Erkennung des Flüssigkeitspegels der in der Geschirrspülmaschine enthaltenen Spülflüssigkeit, wobei mindestens ein kapazitiver Füllstandssensor vorgesehen ist, dessen elektrische Kapazität sich in Abhängigkeit von der Höhe des Flüssigkeitspegels verändert.

Ein Vorteil der erfindungsgemäßen Geschirrspülmaschine besteht darin, dass durch das System zur Erkennung des Flüssigkeitspegels nach der vorliegenden Erfindung ohne bewegliche Teile und allein durch die Verwendung elektronischer Komponenten der Flüssigkeitspegel in der Geschirrspülmaschine ermittelt werden kann. Dadurch ist das erfindungsgemäße System zur Erkennung des Flüssigkeitspegels gegenüber Verschleiß und Verschmutzung durch abgelagerte Spülrückstände weitgehend unanfällig. Da kein Raum mehr für mechanische Vorrichtungen berücksichtigt werden muss, ist ein weiterer Vorteil des erfindungsgemäßen Systems zur Erkennung des Flüssigkeitspegels darin zu sehen, dass es nur einen sehr geringen Platzbedarf hat und deshalb nahezu beliebig auch an unzugänglichen Stellen in der Geschirrspülmaschine untergebracht werden kann. Das erfindungsgemäße System ermöglicht ferner eine kontaktlose Füllstanderkennung, bei der die Spülflüssigkeit und der Füllstandssensor nicht miteinander in Berührung kommen, was in der nachfolgenden Beschreibung näher erläutert wird.

Die in Geschirrspülmaschinen verwendete Spülflüssigkeit entspricht einer mit Reinigungsmitteln versetzten Lösung, die im wesentlichen aus Wasser besteht. Wasser hat eine relative Dielektrizitätskonstante von $\varepsilon_W = 81$, die sich deutlich gegenüber der Dielektrizitätskonstante von Luft ($\varepsilon_L = 1$) unterscheidet. Dieser deutliche Unterschied zwischen den Dielektrizitätskonstanten von Wasser und Luft wird als physikalische Grundlage bei dem System zur Füllstanderkennung nach der vorliegenden Erfindung ausgenutzt, um den Flüssigkeitspegel in der Geschirrspülmaschine zu ermitteln. Dazu ist der Füllstandssensor in der Art eines Kondensators ausgebildet, dessen elektrische Kapazität sich in Abhängigkeit von der Höhe des Flüssigkeitspegels verändert. Die Veränderung der elektrischen Kapazität des kapazitiven Füllstandssensors beruht dabei auf der physikalischen Gesetzmäßigkeit, dass die elektrische Kapazität eines Kondensator - neben der Kondensatorfläche und deren Abstand zueinander - von der Dielektrizitätskonstante des Mediums bzw. des Dielektrikums abhängig ist, das sich in dem elektromagnetischen Feld befindet, das sich zwischen den Kondensatorflächen ausbildet. Diese Zusammenhänge lassen sich mit der folgenden Gleichung darstellen, wobei C die elektrische Kapazität des Kondensators ist, A die Kondensatorfläche, d der Abstand zwischen den Kondensatorflächen und $\varepsilon$ die Dielektrizitätskonstante des Dielektrikums:

$$C = \varepsilon\, A/d$$

Wenn das Dielektrikum bzw. das Medium wechselt, das sich in dem elektromagnetischen Feld zwischen den Kondensatorflächen befindet, so verändert sich auch der Faktor der Dielektrizitätskonstante $\varepsilon$. Da die übrigen Faktoren der oben genannten Gleichung unverändert bleiben, verändert sich die Kapazität des kapazitiven Füllstandssensors direkt proportional mit der Veränderung der Dielektrizitätskonstante des Dielektrikums.

Das bedeutet in der konkreten Anwendung nach der vorliegenden Erfindung, dass sich die elektrische Kapazität des kapazitiven Füllstandssensors etwa um den Faktor 81 vergrößert, wenn der Füllstandssensor von Wasser anstelle von Luft umgeben wird, d.h. Wasser anstelle von Luft das Dielektrikum darstellt. Diese Kapazitätsänderung lässt sich gemäß einer bevorzugten Ausführungsform der Erfindung mit Hilfe einer an den kapazitiven Füllstandssensor angeschlossenen elektronischen Schaltung auswerten. Da die elektrische Kapazität des kapazitiven Füllstandssensors mit Wasser oder Luft als Dielektrikum zuvor bekannt sind, kann über die elektronische Schaltung eindeutig festgestellt werden, ob der Füllstandssensor von Wasser oder von Luft umgeben ist.

Der kapazitive Füllstandssensor ist zweckmäßigerweise so in der Geschirrspülmaschine angeordnet, dass ein oder mehrere bestimmte Flüssigkeitspegel der Spülflüssigkeit in der Geschirrspülmaschine durch den Füllstandssensor bzw. ein Über- oder Unterschreiten dieser Flüssigkeitspegel festgestellt werden können. Es ist auch möglich, Abstufungen der Kapazitätsänderung des Füllstandssensors bestimmten Flüssigkeitspegeln der Spülflüssigkeit in der Geschirrspülmaschine zuzuordnen, so dass nicht nur ein Über- oder Unterschreiten bestimmter Flüssigkeitspegel, sondern auch die exakte Höhe des Flüssigkeitspegels im Spülbehälter der Geschirrspülmaschine mit Hilfe des erfindungsgemäßen Systems mit kapazitivem Füllstandssensor festgestellt werden kann.

Der oben beschriebene physikalische Effekt der Kapazitätsänderung des kapazitiven Füllstandssensors lässt sich ferner dadurch erklären, dass die Ladungsträger auf dem Füllstandssensor nach einer bestimmten Einschwingzeit eine stabile Ladungsverteilung einnehmen, solange sich die äußeren Bedingungen nicht verändern. Sobald nun sich das den Füllstandssensor umgebende Medium beispielsweise durch einen Anstieg der Spülflüssigkeit im Spülbehälter der Geschirrspülmaschine ändert, ändert sich auch die Verteilung der Ladungsträger auf dem Füllstandssensor, was von dem elektronischen Schaltkreis detektiert wird. Dabei ist es von Vorteil, wenn der Füllstandssensor insbesondere auf die relative Dielektrizitätskonstante von Wasser reagiert. Die Sensibilisierung des kapazitiven Füllstandssensors auf die Dielektrizitätskonstante von Wasser ist bei der vorliegenden Verwendung von Vorteil, da in Geschirrspülmaschinen wässrige Lösungen als Spülflüssigkeit eingesetzt werden und so die Ermittlung des Flüssigkeitspegels besonders exakt vorgenommen werden kann.

Bei einer weiteren bevorzugten Ausführungsform der vorliegenden Erfindung weist der Füllstandssensor mindestens eine, z. B. zwei aktive Sensorflächen auf, bei denen sich ein elektromagnetisches Feld ausbilden kann, das sich in Abhängigkeit von der Dielektrizitätskonstante des die Sensorflächen umgebenden Mediums verändert. Die aktiven Sensorflächen befinden sich vorzugsweise in einer gegenüberliegenden Position, so dass sich ein möglichst homogenes elektromagnetisches Feld zwischen ihnen ausbilden kann, dessen Veränderung leicht zu erfassen ist. Es ist wenigstens eine aktive Sensorfläche erforderlich, wobei auch andere Teile im Spülbehälter als Sensorfläche fungieren können. Damit stehen zwei Sensorflächen zur Verfügung.

Besonders vorteilhaft ist es, wenn der Füllstandssensor außerhalb des Spülbehälters angeordnet ist und der Füllstandssensor bzw. dessen Sensorflächen von der Spülflüssigkeit vorzugsweise durch die Wand des Spülbehälters isoliert ist. Auf diese Weise kann der Füllstandssensor effektiv vor schädlichen Einwirkungen der Spülflüssigkeit und den darin enthaltenen Spülrückständen oder Reinigungsmitteln geschützt werden. Dadurch wird eine zuverlässige und dauerhafte Funktion des erfindungsgemäßen Systems zur Füllstandserkennung gewährleistet.

In der vorangehenden Ausführungsform der Erfindung ist der Füllstandssensor außerhalb des Spülbehälters angeordnet, so dass zwischen dem Füllstandssensor und der Spülflüssigkeit die Wand des Spülbehälters liegt, um den Füllstandssensor vor schädlichen Einflüssen der Spülflüssigkeit zu schützen. Um die Genauigkeit bei der Feststellung des Flüssigkeitspegels durch die Wand des Spülbehälters jedoch nicht zu beeinträchtigen, ist bei einer weiteren Ausführungsform innerhalb des Spülbehälters zumindest eine Sensorsonde aus elektrisch leitendem Material vorgesehen, so dass sich zwischen der Sensorsonde und dem Füllstandssensor ein elektromagnetisches Feld ausbilden kann, wobei sich das elektromagnetische Feld in Abhängigkeit von der Höhe des Flüssigkeitspegels verändert bzw. in Abhängigkeit von der Dielektrizitätskonstante des die Sensorsonde umgebenden Mediums verändert. Durch das Anbringen einer Sensorsonde auf der Seite des zu detektierenden Mediums, also innerhalb des Spülbehälters, kann die Empfindlichkeit des Füllstandssensors und damit die Genauigkeit bei der Feststellung des Flüssigkeitspegels im Spülbehälter gesteigert werden. Während die aktive Sensorfläche des Füllstandssensors auf der Außenseite an der Wand des Spülbehälters angeordnet ist, befindet sich die Sensorsonde gegenüber der aktiven Sensorfläche des Füllstandssensors auf der Innenseite der Wand des Spülbehälters und damit im Inneren des Spülbehälters.

Der elektrisch leitende Körper der Sensorsonde ist gegenüber der aktiven Fläche des Füllstandssensors folglich bei der oben beschriebenen Ausführungsform durch die Wand des Spülbehälters isoliert angebracht. Der Vorteil dieser Anordnung besteht darin, dass dabei die aktive Sensorfläche des Füllstandssensors und die Sensorsonde elektrische Gegenpole bilden, zwischen denen sich ein elektromagnetisches Feld ausbilden kann, das sich in Abhängigkeit von dem die Sensorsonde umgebenden Medium verändert. Die Isolierung wird durch die Wand des Spülbehälters erzeugt, die sich zwischen dem Füllstandssensor und der Sensorsonde befindet. Berührt nun die zu erfassende Flüssigkeit die Sensorsonde, wird die elektrische Ladungsverteilung auf dem Füllstandssensor verändert, worauf der kapazitive Füllstandssensor reagiert. Die aktive Sensorfläche des Füllstandssensors befindet sich wiederum außerhalb des mit Spülflüssigkeit gefüllten Spülbehälters und kommt dadurch nicht direkt mit der Spülflüssigkeit in Kontakt. Der Vorteil der kapazitiven Füllstandmessung liegt folglich darin, dass der Wasserpegel durch die elektrisch nicht leitende Behälterwand hindurch erfasst werden kann.

Bei einer weiteren bevorzugten Ausführungsform der vorliegenden Erfindung wird die elektrische Kapazität des Füllstandssensors und deren Veränderung mit elektronischen Mitteln vorzugsweise qualitativ und quantitativ erfasst, d.h. nicht nur das Erreichen, Überoder Unterschreiten eines bestimmten Flüssigkeitspegels wird durch den Füllstandssensor und den mit ihm verbundenen elektrischen Schaltkreis erfasst, sondern vorzugsweise auch die exakte Höhe des Flüssigkeitspegels. Die elektronische Schaltung lässt sich dabei besonders praktisch in Form eines oder mehrerer integrierter Schaltkreise realisieren, die günstig in der Herstellung sind und einen geringen Platzbedarf haben.

In der elektronischen Schaltung kann zweckmäßigerweise zur Vermeidung von unbestimmten Erkennungszuständen ein bestimmter Grenzwert der elektrischen Kapazität des Füllstandssensors festgelegt werden zur Fallunterscheidung, ob sich der Sensor in der Nähe eines Mediums mit hoher oder niedriger Dielektrizitätskonstante befindet bzw. ob der Sensor von einer wässrigen Flüssigkeit oder von Luft umgeben ist.

Im Folgenden wird die vorliegende Erfindung anhand eines bevorzugten Ausführungsbeispiels unter Bezugnahme auf die beigefügte Zeichnung näher erläutert.

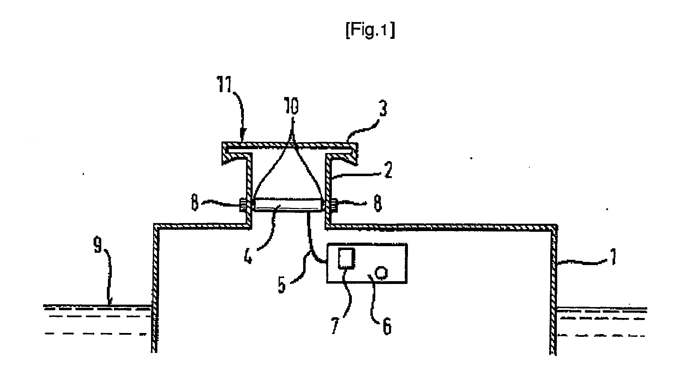

Figur 1 zeigt einen Querschnitt durch einen Teil des Pumpentopfes einer Geschirrspülmaschine mit einem System zur Füllstandserkennung nach der vorliegenden Erfindung in einer bevorzugten Ausführungsform. Da der Pumpentopf den unteren Teil des Spülbehälters darstellt, in dem sich die in der Geschirrspülmaschine enthaltene Spülflüssigkeit sammelt, ist der Pumpentopf eine für die Anordnung des Systems zur Füllstanderkennung besonders geeignete Stelle in der Geschirrspülmaschine. In der Figur 1 ist nur der Teil des Pumpentopfes dargestellt, der in Form einer Erhebung 1 nach oben ausgebildet ist. Bei der in der Zeichnung dargestellten Situation ist die Erhebung 1 im Pumpentopf von Spülflüssigkeit umgeben, wobei der Flüssigkeitspegel 9 im unteren Bereich des Pumpentopfes der Geschirrspülmaschine ansteht.

Im oberen Bereich der Erhebung 1 ist ein Dom 11 ausgebildet, wobei die Wände 2 des Pumpentopfes, der Erhebung 1 und des Doms 11 jeweils integral miteinander verbunden sind und damit die Wand 2 des Spülbehälters in seinem unteren Bereich darstellen. Dadurch sind auch die Innenräume des Pumpentopfes, der Erhebung 1 und des Doms 11 miteinander verbunden und vor Spülflüssigkeit geschützt, die den Dom 11 und die Erhebung 1 umspült. Im Innenraum des Doms 11 ist ein Füllstandssensor 4 angeordnet. Der Füllstandssensor 4 ist in Form eines geraden Stabes ausgebildet, an dessen gegenüberliegenden Enden sich jeweils eine aktive Sensorfläche 10 befindet. Beim Betrieb des Systems zur Füllstanderkennung stellt sich auf den aktiven Sensorflächen 10 eine bestimmte Ladungsträgerverteilung ein, die sich in Abhängigkeit vom Pegel 9 der Spülflüssigkeit in der Geschirrspülmaschine verändert. Das heißt, wenn sich das die aktiven Sensorflächen 10 umgebende Medium beispielsweise durch einen Anstieg der Spülflüssigkeit im Spülbehälter der Geschirrspühnaschine ändert, so ändert sich auch die Verteilung der Ladungsträger auf dem Füllstandssensor 4. Sowohl die absolute als auch die relative Änderung dieser Ladungsträgerverteilung auf dem Füllstandssensor 4 kann als direktes Maß für die Ermittlung der Veränderung bzw. der absoluten Höhe des Flüssigkeitspegels 9 der Spülflüssigkeit in der Geschirrspülmaschine verwendet werden.

Die aktiven Sensorflächen 10 des Füllstandssensors 4 grenzen jeweils an die Innenseite der Wand 2 an, so dass die aktiven Sensorflächen 10 des Füllstandssensors 4 stets durch die Wand 2 von der Spülflüssigkeit getrennt. Auf diese Weise kann der Füllstandssensor 4 vor störenden Einwirkungen der Spülflüssigkeit und den darin enthaltenen Spülrückständen oder Reinigungsmitteln geschützt werden, was eine zuverlässige und dauerhafte Funktion des erfindungsgemäßen Systems zur Füllstanderkennung gewährleistet.

Auf der den aktiven Sensorflächen 10 gegenüberliegenden Seite der Wand 2 ist jeweils eine Sensorsonde 8 angeordnet. Folglich sind die aktiven Sensorflächen 10 und der Füllstandssensor 4 auf der "trockenen" Seite an der Wand 2 des Spülbehälters angeordnet, während sich die Sensorsonden 8 unmittelbar gegenüber den aktiven Sensorflächen 10 des Füllstandssensors 4 auf der von Spülflüssigkeit umspülten Seite der Wand 2 des Spülbehälters und damit im Inneren des Spülbehälters befinden. Durch das Anbringen der Sensorsonden 8 im Inneren des Spülbehälters, wird die Empfindlichkeit des Füllstandssensors 4 und damit die Genauigkeit bei der Feststellung des Flüssigkeitspegels 9 im Spülbehälter gesteigert.

Die Sensorsonden 8 bestehen aus elektrisch leitendem Material, so dass sich zwischen den Sensorsonden 8 und dem Füllstandssensor 4 ein elektromagnetisches Feld ausbilden kann. Dieses elektromagnetische Feld verändert sich in Abhängigkeit von der Dielektrizitätskonstante des die Sensorsonden 8 umgebenden Mediums und damit in Abhängigkeit vom Flüssigkeitspegel 9 der Spülflüssigkeit in der Geschirrspülmaschine. Sobald der Flüssigkeitspegel 9 der Spülflüssigkeit in der Geschirrspülmaschine steigt bzw. die Spülflüssigkeit die Sensorsonden 8 berührt, wird die elektrische Ladungsverteilung auf dem Füllstandssensor 4 bzw. dessen elektrische Kapazität verändert.

Der Füllstandssensor 4 ist über eine elektrische Leitung 5 mit einer elektronischen Schaltung 6 verbunden, welche die Veränderung der Ladungsverteilung des Füllstandssensors 4 bzw. die Veränderung seiner elektrischen Kapazität erfasst und auswertet. Die elektronische Schaltung umfasst zweckmäßigerweise einen oder mehrere integrierte Schaltkreise 7, die auf die Auswertung der vom Füllstandssensor 4 gelieferten Signale speziell programmiert sind. Das Ergebnis dieser Auswertung wird an die Programmsteuerung der Geschirrspülmaschine weitergeleitet, die bei Bedarf Maßnahmen zur Veränderung des Pegels der Spülflüssigkeit in der Geschirrspülmaschine einleitet, wie z.B. das Öffnen eines Ventils zur Frischwasserzufuhr oder die Aktivierung der Laugenpumpe zum Abpumpen von Spülflüssigkeit aus der Geschirrspülmaschine.

Der Dom 11 ist auf seiner Oberseite in Form eines überkragenden Daches 3 ausgebildet, das als Spritzwasserschutz für die Sensorsonden 8 dient. Der Spritzwasserschutz 3 dient der Vermeidung von Fehlmessungen des Systems zur Füllstandserkennung, die beispielsweise während des Spülbetriebs durch Spritzer von Spülflüssigkeit auf die Sensorsonden 8 verursacht werden könnten. Auf diese Weise wird sichergestellt, dass ausschließlich der tatsächliche Flüssigkeitspegel 9 der Spülflüssigkeit in der Geschirrspülmaschine vom System zur Füllstandserkennung ermittelt wird.

Durch das erfindungsgemäße System kann die Erfassung eines bestimmten Flüssigkeitsniveaus mittels kapazitiver Sensoren bei hoher Genauigkeit vorgenommen werden, wobei die aktiven Sensorflächen 10 und der Füllstandssensor 4 galvanisch von dem zu detektierenden Medium vollständig entkoppelt sind. Damit ist eine Lehre gegeben, kapazitive Sensorsysteme auch zur Wasserstands-Erkennung in Geschirrspülmaschinen einzusetzen.

**Liste der Bezugszeichen**

1 Erhebung im Pumpentopf der Geschirrspülmaschine

2 Wand des Pumpentopfes bzw. Spülbehälters

3 Spritzwasserschutz

4 Füllstandssensor

5 elektrische Verbindung zwischen Füllstandssensor 4 und elektronischer Schaltung

6 elektronische Schaltung

7 integrierter Schaltkreis

8 Sensorsonden des Füllstandssensors 4

9 Flüssigkeitspegel der Spülflüssigkeit in der Geschirrspülmaschine

10 aktive Sensorflächen des Füllstandssensors 4

11 Dom der Erhebung 1

**Patentansprüche**

1.  Geschirrspülmaschine mit mindestens einem Spülbehälter zur Aufnahme von zu reinigendem Spülgut und einem System zur Erkennung des Flüssigkeitspegels (9) der in der Geschirrspülmaschine enthaltenen Spülflüssigkeit mit mindestens einem kapazitiven Füllstandssensor (4), dessen elektrische Kapazität sich in Abhängigkeit von der Höhe des Flüssigkeitspegels (9) verändert, **dadurch gekennzeichnet, dass** innerhalb des Spülbehälters zumindest eine Sensorsonde (8) aus elektrisch leitendem Material vorgesehen ist und sich zwischen der Sensorsonde (8) und dem Füllstandssensor (4) ein elektromagnetisches Feld ausbilden kann, wobei sich das elektromagnetische Feld in Abhängigkeit von der Höhe des Flüssigkeitspegels (9) verändert bzw. in Abhängigkeit von der Dielektrizitätskonstante des die Sensorsonde (8) umgebenden Mediums verändert, wobei die mindestens eine Sensorsonde (8) gegenüber einer aktiven Sensorfläche (10) des Füllstandssensors (4) vorzugsweise durch eine Wand (2) des Spülbehälters voneinander getrennt angeordnet ist.

2.  Geschirrspülmaschine nach Anspruch 1, wobei der Füllstandssensor (4) in der Art eines Kondensators ausgebildet ist, dessen elektrische Kapazität sich in Abhängigkeit von der Dielektrizitätskonstante des den Füllstandssensor (4) umgebenden Mediums verändert.

3.  Geschirrspülmaschine nach einem der Ansprüche 1 oder 2, wobei der Füllstandssensor (4) insbesondere auf die relative Dielektrizitätskonstante von Wasser reagiert.

4.  Geschirrspülmaschine nach einem der vorangehenden Ansprüche, wobei der Füllstandssensor (4) zumindest zwei vorzugsweise sich gegenüberliegende aktive Sensorflächen (10) aufweist, zwischen denen sich ein elektromagnetisches Feld ausbilden kann, das sich in Abhängigkeit von der Dielektrizitätskonstante des die Sensorflächen (10) umgebenden Mediums verändert.

5.  Geschirrspülmaschine nach einem der vorangehenden Ansprüche, wobei der Füllstandssensor (4) außerhalb des Spülbehälters angeordnet ist und der Füllstandssensor (4) bzw. dessen Sensorflächen (10) von der Spülflüssigkeit vorzugsweise durch die Wand (2) des Spülbehälters isoliert ist.

6.  Geschirrspülmaschine nach einem der vorangehenden Ansprüche, wobei die elektrische Kapazität des Füllstandssensors (4) und deren Veränderung mit elektronischen Mitteln (5, 6, 7) vorzugsweise qualitativ und quantitativ erfasst wird.

7.  Geschirrspülmaschine nach einem der vorangehenden Ansprüche, wobei elektronische Speichermittel vorgesehen sind, in denen mindestens ein Referenzwert gespeichert werden kann, der einer elektrischen Kapazität des Füllstandssensors (4) bei einem bestimmten Flüssigkeitspegel (9) entspricht.

**8.** Geschirrspülmaschine nach einem der vorangehenden Ansprüche, wobei ein bestimmter Grenzwert der elektrischen Kapazität des Füllstandssensors (4) festgelegt ist zur Fallunterscheidung, ob sich der Füllstandssensor (4) in der Nähe eines Mediums mit hoher oder niedriger Dielektrizitätskonstante befindet bzw. ob der Füllstandssensor (4) von einer wässrigen Flüssigkeit oder von Luft umgeben ist.

## Claims

**1.** Dishwashing machine with at least one rinsing container for reception of rinsing stock to be cleaned and a system for recognition of the liquid level (9) of the rinsing liquid contained in the dishwashing machine, with at least one capacitive filling state sensor (4), the electrical capacitance of which changes in dependence on the height of the liquid level (9), **characterised in that** at least one sensor probe (8) of electrically conductive material is provided within the rinsing container and that an electromagnetic field can form between the sensor probe (8) and the filling state sensor (4), wherein the electric magnetic field changes in dependence on the height of the liquid level (9) or changes in dependence on the dielectric constant of the medium surrounding the sensor probe (8), wherein the at least one sensor probe (8) is arranged opposite an active sensor surface (10) of the filling state sensor (4) preferably to be separated from one another by a wall (2) of the rinsing container.

**2.** Dishwashing machine according to claim 1, wherein the filling state sensor (4) is constructed in the manner of a capacitor, the electrical capacitance of which changes in dependence on the dielectric constant of the medium surrounding the filling state sensor (4).

**3.** Dishwashing machine according to one of claims 1 and 2, wherein the filling state sensor (4) reacts to, in particular, the relative dielectric constant of water.

**4.** Dishwashing machine according to any one of the preceding claims, wherein the filling state sensor (4) comprises at least two active sensor surfaces (10) which are preferably mutually opposite and between which an electromagnetic field can form which changes in dependence on the dielectric constant of the medium surrounding the sensor surfaces (10).

**5.** Dishwashing machine according to any one of the preceding claims, wherein the filling state sensor (4) is arranged outside the rinsing container and the filling state sensor (4) or the sensor surfaces (10) thereof is or are insulated from the rinsing liquid preferably by the wall (2) of the rinsing container.

**6.** Dishwashing machine according to any one of the preceding claims, wherein the electrical capacitance of the filling state sensor (4) and the change therein is preferably qualitatively and quantitatively detected by electronic means (5, 6, 7).

**7.** Dishwashing machine according to any one of the preceding claims, wherein electronic memory means are provided in which at least one reference value can be stored, which reference value corresponds with an electrical capacitance of the filling state sensor (4) at a specific liquid level (9).

**8.** Dishwashing machine according to any one of the preceding claims, wherein a specific limit value of the electrical capacitance of the filling state sensor (4) is established for distinction of the case as to whether the filling state sensor (4) is disposed in the vicinity of a medium with a higher or lower dielectric constant or whether the filling state sensor (4) is surrounded by an aqueous liquid or by air.

## Revendications

**1.** Lave-vaisselle avec au moins une cuve de lavage destinée à recevoir des objets à nettoyer et un système de détection du niveau du liquide de lavage (9) contenu dans le lave-vaisselle avec au moins un capteur capacitif de niveau de remplissage (4) dont la capacité électrique varie en fonction de la hauteur du niveau de liquide (9), **caractérisé en ce qu'**est prévue, dans la cuve de lavage, au moins une sonde de capteur (8) en matière électroconductrice et un champ électromagnétique peut se créer entre la sonde de capteur (8) et le capteur de niveau de remplissage (4), le champ magnétique se modifiant en fonction de la hauteur du niveau de liquide (9) resp. en fonction de la constante diélectrique du milieu entourant la sonde de capteur (8), l'au moins une sonde de capteur (8) étant située en face d'une surface de capteur active (10) du capteur de niveau de remplissage (4) tout en étant séparée de préférence par une paroi (2) de la cuve de lavage.

**2.** Lave-vaisselle selon la revendication 1, le capteur de niveau de remplissage (4) se présentant sous la forme d'un condensateur dont la capacité électrique varie en fonction de la constante diélectrique du milieu entourant le capteur de niveau de remplissage (4).

**3.** Lave-vaisselle selon l'une des revendications 1 ou 2, le capteur de niveau de remplissage (4) réagissant notamment à la constante diélectrique relative de l'eau.

**4.** Lave-vaisselle selon l'une des revendications précédentes, le capteur de niveau de remplissage (4) présentant au moins deux surfaces de capteur actives (10) préférentiellement en vis-à-vis, entre lesquelles peut se créer un champ électromagnétique qui varie en fonction de la constante diélectrique du milieu qui entoure les surfaces de capteur (10).

5. Lave-vaisselle selon l'une des revendications précédentes, le capteur de niveau de remplissage (4) étant situé en dehors de la cuve de lavage et le capteur de niveau de remplissage (4) resp. ses surfaces de capteur (10) étant isolés du liquide de lavage de préférence par la paroi (2) de la cuve de lavage.

6. Lave-vaisselle selon l'une des revendications précédentes, la capacité électrique du capteur de niveau de remplissage (4) et sa variation étant détectées à l'aide de moyens électroniques (5, 6, 7) de préférence qualitativement et quantitativement.

7. Lave-vaisselle selon l'une des revendications précédentes, des moyens de mémoire électroniques étant prévus, dans lesquels peut être stockée au moins une valeur de référence qui correspond à une capacité électrique du capteur de niveau de remplissage (4) pour un niveau de liquide déterminé (9).

8. Lave-vaisselle selon l'une des revendications précédentes, une valeur limite déterminée de la capacité électrique du capteur de niveau de remplissage (4) étant fixée pour distinguer si le capteur de niveau de remplissage (4) se trouve à proximité d'un milieu avec une constante diélectrique élevée ou faible ou si le capteur de niveau de remplissage (4) est entouré d'un liquide aqueux ou d'air.

EP 1 699 343 B1

[Fig.1]

8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2924556 A